# EUROPEAN PATENT SPECIFICATION

(11) **EP 2 631 150 B1**
(45) Date of publication and mention of the grant of the patent: **31.03.2021**
(21) Application number: 13155994.0
(22) Date of filing: 20.02.2013
(51) Int. Cl.: B61K 9/12

(54) **Improved method and arrangement for measuring characteristics of a vehicle travelling on a rail**
Verbessertes Verfahren und Anordnung zur Messung der Eigenschaften eines auf Schienen fahrenden Fahrzeugs
Procédé et dispositif améliorés permettant de mesurer les caractéristiques d'un véhicule se déplaçant sur un rail

(30) Priority: 24.02.2012 FI 20125212
(43) Date of publication of application: 28.08.2013
(73) Proprietor: Tamtron Systems Oy, 02171 Espoo (FI)
(72) Inventor: Gustafsson, Jouni, 33240 Tampere (FI); Asikainen, Pentti, 33500 Tampere (FI)
(74) Representative: Heinonen & Co

(56) References cited:
- EP-A1- 1 607 726
- WO-A1-86/03582
- DE-A1- 19 941 843

## Description

### TECHNICAL FIELD OF THE INVENTION

The present invention relates to an improved solution for measuring characteristics of a wheel travelling on a rail, in particularly a flat wheel when the wheel is passing a measuring zone.

### BACKGROUND OF THE INVENTION

Detection of characteristics or conditions of wheels of a vehicle travelling on a rail is important in order to discover broken wheels, such as a flat wheel, because broken wheel may further cause damages for example to the rail and rail structure, as well as to the wheel itself. It may also cause damages to the vehicle due to excessive vibration in the vehicle when rolling along the track. Furthermore a broken wheel may be a safety risk. Detection of weight of a wheel is also significant when assessing loadings of a vehicle or distribution of load between wheels of an axle, and effects of the wheel to the rail and rail structure comprising sleepers and ballast stone bedding.

Identification of the broken wheel and also the corresponding wagon and axle is also important in order that right parties can be warned about the broken wheel immediately in real time and thus the broken wheel can be repaired or changed when a vehicle with the broken wheel arrives at a station. Also monitoring of evolution of defect of a wheel may be important in a certain situation, for example when the wheel or springing of the wheel is only slightly damaged and the condition of the wheel is predicted to deteriorate in use.

Different kinds of solutions for detecting characters of wheels and vehicles travelling on a rail are known from prior art. For example, document WO 87/06203 describes an apparatus for track-based detection of damages in railway wheels on passing carriage, where a measuring stretch consisting of a section of the ordinary track is equipped with a number of motion sensitive transducers measuring the rail's movement or acceleration in vertical direction when a carriage passes. According to the solution of WO 87/06203 the transducers of a rail are read when the wheel travels on the rail in such a manner that each transducer reads a section of the wheel circumference but the signals are combined in such a manner that the entire wheel circumference is read and the read signals are processed or stored for later data processing.

DE4439342 discloses a circuit for determining non-round wheels of rail track vehicles wherein a number of sensors is provided both in longitudinal and transversal directions relative to a predetermined rail section.

US4701866 discloses an apparatus for measuring loads transmitted via wheels to a track. Means responsive to the load are located at a plurality of equally spaced locations on a portion of the track. Each signal is compared with the largest earlier signal for the same wheel, a flat wheel being detected based on this comparison

EP1607726 discloses a method for wheel measurement where virtual measurement subzones of a rail are used, whereby the measurement subsequent wheels travelling simultaneously on the measurement zone can be analyzed separately. The acquired measurement data is then compared to typical data of an unbroken wheel.

EP1212228 discloses a method for wheel measurement where a signal acquired from a wheel is compared to the average value of a measurement signal of the concerned wheel. When a predetermined deviation from the average value is exceeded an eccentricity or a wheel flat is displayed.

There are some problems related to the prior art solutions. A wheel flat may cause peaks in the measured signal which have a significant effect on the average value of a signal. It is possible that the measured signal includes minor spikes for other reasons as well, which affect the signal average value. When the measured signal of a wheel is then compared to the average value of the signal it is possible that a predetermined deviation value is not observed even if a wheel is broken. On the other hand, it is possible that a small defect in a wheel is erroneously displayed as a significant wheel flat. Therefore, the measurement method may be unreliable.

### SUMMARY OF THE INVENTION

It is an object of the invention to provide a solution for measuring characteristics of a wheel travelling on a rail wherein the problems of the prior art are avoided or reduced. Therefore, it is an object of the invention to provide a measurement method which has good reliability and accuracy in detecting defects in a wheel axle, bogie or wagon when the wheel bypasses a measuring field.

The object of the invention is achieved with an arrangement according to the invention for measuring characteristics of a wheel travelling on a rail lying on sleepers, wherein the wheel has a normal part and may have a defected part, and wherein the arrangement comprises sensors adapted to measure force effects induced by the wheel to the rail, the sensors forming a measurement zone and being coupled with data processing means and, wherein the data processing means is adapted to read data from the sensors, which arrangement is characterized in that
- the processing means are adapted to select a median data sample from sensor data related to a wheel and to determine a reference force value of the normal part of the wheel on the basis of the value of the selected sample data,
- the processing means are adapted to compare data relating to said wheel with the reference value, and
- the processing means are adapted to inform a user when the deviation in said comparison exceeds a predetermined threshold value.

The object is also achieved with a method for measuring characteristics of an wheel travelling on a rail lying on sleepers, wherein the wheel has a normal part and may have a defected part, and wherein force effects induced by the object to the rail are detected by a plurality of sensors forming a measurement zone, which method is characterized in that
- a median data sample is selected from sensor data related to a wheel and a reference force value of the normal part of the wheel is determined on the basis of the value of the selected sample data,
- data relating to said wheel is compared with the reference value, and
- the processing means are adapted to inform a user when the deviation in said comparison exceeds a predetermined threshold value.

The invention also relates to a processor program product for implementing the method. The invention further relates to a data processing unit which comprises said processor program product.

Some further advantageous embodiments of the invention are described in dependent claims.

In the invention a median sample is selected from the sensor data relating to the measured wheel, whereby the reference value of a normal part of the wheel is the median value. The use of the median value has important advantages. The measurement may include short spikes caused by the flat wheel or disturbances. The value of such spikes may be significant. Therefore it is advantageous to select a reference sample at the middle of a sample queue where the samples are arranged in an order of magnitude. The short spikes in the measurement signal do not affect such a median value of the signal, and the reference value thus indicates the weight force of the normal part of the measured wheel very accurately. The defects in the wheel can thus be detected in a reliable manner.

In another embodiment of the invention a derivative or high pass filtering of the median sample data relating to the wheel is provided. In a further embodiment of the invention the derivative data or high pass filtered data is compared with a second threshold value, and a user is informed when the deviation in said comparison exceeds a predetermined threshold value. Exceeding a threshold value means that a fast changing force is detected in the rail. Such a force may be especially harmful to the rail structure or to the wheel structure. Applying the derivative also has an advantage that the average weight force of the wheel does not affect the measurement, especially if the measurement is started after the force effect has been stabilized after the concerned wheel has entered the measurement field.

In one embodiment of the invention an integral is provided of the sample data or of the derivative or high pass filtered form of the sample data. Integral data may further be compared with a third threshold value, and to inform a user when the deviation in said comparison exceeds a third predetermined threshold value. The comparison of the integrated signal may be used as a supplementary or alternative analysis for detecting defected wheels.

In one embodiment of the invention the measurement field of the measurement arrangement comprises sleeper sensors between sleepers and rail, and rail sensors in the rail between sleepers. In a further embodiment the measurement arrangement comprises sensors at the ends of the measurement zones for detecting a wheel and activating the measurement.

The sensors are a means for measuring forces and shearing stresses induced on a rail, when a wheel, axle, bogie and/or wagon travels on it. A sensor unit may comprise a stretch slip, pressure and temperature sensing means, memory unit, A/D-converter, means for transmitting and receiving data. Furthermore the sensor may also comprise ID information so the sensor can be identified. Advantageously the sensor used in the present invention comprises a bonded electrical resistance strain gauge. The sensor locating at the point of a sleeper (sleeper sensor) can be adapted into a rail fastening unit, whereupon the sensor can be removed very easy and fast, if it gets broken. The sleeper sensor is advantageously a type of a double ended shear beam sensor, and is adapted to sense at least vertical forces. Further the sensor attached in the rail (rail sensor) between the sleepers is typically a type of a press fit sensor or a shear force transducer, which is adapted to sense at least horizontal forces. The rail sensor is typically attached to the rail so that first a hole is drilled into the rail, where after the press fit type sensor is fitted into the hole. The sleeper sensors thus detect mainly vertical forces and rail sensors detect mainly horizontal forces so that interference forces of the adjacent wheel distributing along the rail can be determined with the rail sensors, such as also horizontal forces of the wheel to be monitored, and thus it is possible to compose reliable general view of force distributions.

It is also possible that rail sensors are used for detecting the moment when the wheel passes the sensor position, and this information can be used for changing the measurement sub-range of the wheel. In such case the rail sensor may measure vertical forces. It is also possible to use inductive rail contactors for this purpose.

The sensors at the ends of the measurement field may be sleeper sensors or rail sensors, but they may also preferably be inductive rail contactors. A purpose of the sensors at the ends of the measurement field is detecting a wheel and giving a signal for the activation of the measurement, but hey may also be used for measuring the distance between axles in a boogie/wagon, the number of axles and the velocity of the vehicle.

A measurement field typically covers the length of 7 to 10 sleepers, but it is obvious for a person skilled in the art that the length of the measurement field can be varied by adding or removing sensors. The length of the measurement zone can be varied based on the measuring situation. The used measurement zone for measuring a wheel is advantageously at least as long as a circumference of the wheel to be measured, and longer, when a bogie or a whole wagon is measured, respectively.

According to one embodiment of the invention a single wheel of a vehicle is monitored continuously, when a wheel travels along the rail over a measurement field. In the measurement arrangement each sensor is preferably coupled with a data processing unit via own communication channel, where the data processing unit is adapted to collect data from each sensor via its own channel and store collected data to a memory means. Advantageous sampling rate of the sensors is typically 5000 samples in a second for each channel, which allows the wheel to travel along the rail at the speed of 250 km/h, and the measuring results will still be reliable. It should be noted that each channel is read at the same time and 5000 times in a second. It is however clear to a skilled person, that the sampling rate can be changed, whereupon the wheel moving faster that 250 km/h can also be measured reliably. The same sampling rate is preferably used for reading data from rail contactors as is used for other sensors in the measurement field.

According to a further embodiment of the invention the data processing unit is adapted to analyse the collected data in such a way, that a type of a vehicle and/or wagon, numbers of wagons, bogies and wheels, as well as total weight of vehicle, weigh of a wagon, bogie and/or wheel and lateral forces can be determined. Moreover the data processing unit is also adapted to analyse collected data in such a way, that possible broken wheels, such as flat wheel, as well as other defects in a structure of the wheel, springing or wagon can be detected.

According to a still further embodiment of the invention the data processing unit is also adapted to construct a display of a user interface means and updating it and also alert when detecting a broken wheel or other anomalous. The data processing unit is advantageously adapted to compare collected data to the data of unbroken wheel and to data measured when a wagon of a certain type travels on the rail, for example, in order to detect anomalous in collected data and to alert. Moreover according to the embodiment of the invention the data processing unit is adapted to visually illustrate measuring results, such as the type and number of wagons, and bogies and/or wheels with defects.

According to one embodiment of the invention the data processing unit is also adapted to construct and display a processed curve of forces induced by a single wheel (or axle, bogie and/or wagon) in a measurement zone with desired length. Advantageously a user can choose a wheel, for which the curve is constructed and displayed, as well as the length of measurement zone or range or even measurement sub-zone or sub-range. According to an advantageous embodiment the data processing unit is also adapted to choose a wheel with anomalous feature automatically and construct and display its processed curve in a manner that the anomalous feature can be clearly detected visually. Anomalies can be discovered by comparing measured data of a wheel to measured data of a healthy wheel of same kind, for example, or by comparing measured data to a certain acceptable fluctuation range.

### BRIEF DESCRIPTION OF THE DRAWINGS

Next the invention will be described in greater detail with reference to exemplary embodiments in accordance with the accompanying drawings, in which
- Figure 1: illustrates an exemplary arrangement according to the invention for measuring characteristics of a vehicle and a wheel of the vehicle travelling on a rail,
- Figure 2: illustrates typical wheel load distribution in a rail and sleepers,
- Figure 3: illustrates a continuous rail-wheel-contact-force analysis in an exemplary implementation of the present invention,
- Figure 4: illustrates an exemplary graph of a measurement of an axle,
- Figure 5: illustrates an exemplary user interface for informing a measurement result,
- Figure 6: illustrates an exemplary user interface and an exemplary graph of continuous force effect of a single wheel travelling on a rail in the measurement zone,
- Figure 7A: illustrates an exemplary graph of a force caused by a flat wheel to a rail in a measurement field,
- Figure 7B: illustrates a wheel with a wheel flat,
- Figure 7C: illustrates a graph showing a derivative of the signal shown in Figure 7A, and
- Figure 7D: illustrates a graph showing an integral value of the wheel flat derivative signal shown in Figure 7C.

### DETAILED DESCRIPTION OF SOME EMBODIMENTS

Next an exemplary implementation of the invention is described where virtual measurement zones are used.

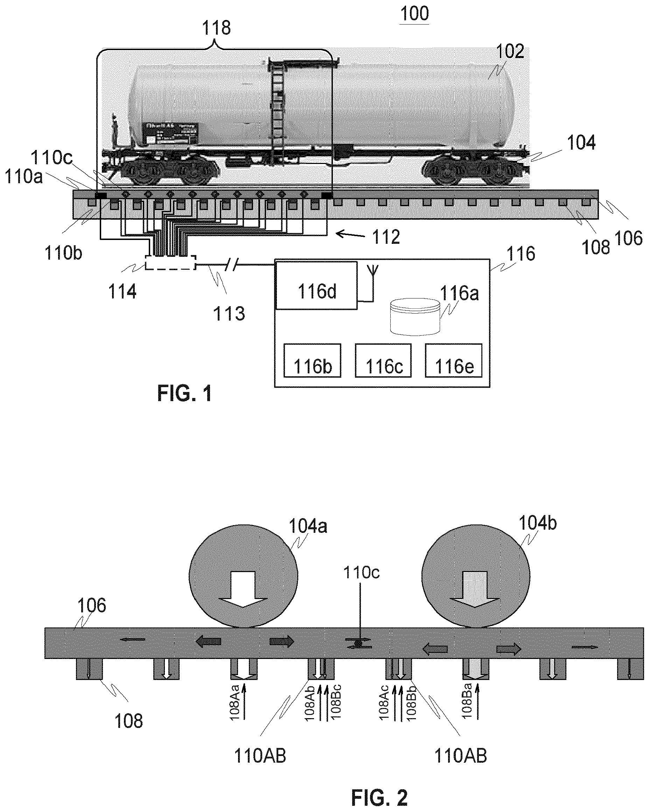

Figure 1 illustrates an exemplary measuring arrangement 100 to measure characteristics of a vehicle 102 and a wheel 104 of the vehicle 102 travelling on a rail 106, according to an exemplary implementation of the present invention. The measuring arrangement 100 advantageously comprises plurality of sensors 110a-110c. Sensors 110a are located at the ends of the measurement zone and they detect the vehicle and activate the measurement. Sensors 110a may preferably be inductive rail contactors, but the functionality may also be achieved with a rail sensor or a boogie sensor. Sensors 110b are arranged at the point of sleepers 108, advantageously integrated to a rail fastening units. Sensors 110c are arranged into the rail 106 between the sleepers 108. The group of the sensors 110a-110c forms a measurement field 118. Typical measurement field according to the invention extends over 7 to 10 sleepers 108. The sleepers can be standard wooden or concrete sleepers or they may be specific sleepers for the measurement purpose.

In the arrangement 100 each sensor 110 is coupled with a data processing unit 116 via own communication channel 112, where the data processing unit 116 is adapted to collect data from each sensor via its own channel and store collected data to a memory means 116a. There may be an optional data collector between the sensors 110 and data processing unit 116, with which the sensors are coupled via own communication channel 112. The data collector collects measurement data from each sensor 110 and advantageously transmits it in a centralised manner to the data processing unit 116 via a communication 113.

It should be noted, that the data collector 114 is optional, and alternatively each sensor can be in communication directly with data processing unit 116. Moreover, the communication between sensors and data processing unit and/or data collector, as well as the communication between the data collector and data processing unit can be implemented by a cable such as Ethernet, or wireless way, such as with radio waves, for example. The Ethernet communication is preferable due to its ability for fast communication.

In this embodiment the data processing unit 116 further comprises a measurement sub-range and measurement range construction means 116b adapted to construct optimal measurement sub-range for a wheel, bogie and/or wagon to be measured and to construct a measurement range from measuring sub-ranges, and a result composing means 116c for composing measurement results with help of constructed measuring range.

The result composing means 116c is preferably adapted to analyse data collected from sensors in such a way, that a type of a vehicle and/or wagon 102, numbers of wagons, bogies and wheels 104, as well as total weight of the whole vehicle, weigh of a wagon, bogie and/or wheel, and also possible broken wheels, such as flat wheel, as well as other defects in a structure of the wheel, springing or wagon are determined.

The result composing means 116c is preferably adapted to compare collected data of a wheel to data of a normal, unbroken part of the concerned wheel. The defected part of the wheel affects the measured data within a relatively small part of the measurement data samples related to the wheel. Therefore, it is possible to determine a data value representing a normal part of the wheel by selecting a sample from the collected data which is not affected by the defect and which best characterizes the normal part of the wheel. This selection is preferably done by determining a median for the data sample group of the wheel. The median can be determined e.g. by arranging the samples in an order according to their value and the value of the middle sample in the arranged data string is selected as the value representing a normal part of the wheel. If the number of samples is an even number, one of the two middle samples may be selected, for example. The data of the wheel is then compared with the threshold value based on the reference force value of the normal part of the wheel. If the deviation exceeds a predetermined value, the user is informed, e.g. by reporting/ alerting a wheel defect on a display of the measurement system. A threshold value may be an absolute value, or it may be a relative value such as a defined percentage of a weight force of the normal part of the wheel.

It is also possible that the result composing means are adapted to provide a derivative or high pass filtering of the sample data relating to the wheel. The derivative data or high pass filtered data is compared with a second threshold value, and a user is informed when the deviation in said comparison exceeds a predetermined threshold value. Exceeding a threshold value means that a fast changing force is detected in the rail. It is possible that the measurement is started after the force effect has been stabilized after the concerned wheel has entered the measurement field.

The length of the wheel flat can be easily determined on the basis of the derivative slope positions, or on the basis of the force graph.

It is further possible that an integral is provided of the sample data or of the derivative or high pass filtered form of the sample data. Integral data may further be compared with a third threshold value, and to inform a user when the deviation in said comparison exceeds a third predetermined threshold value. The comparison of the integrated signal may be used as a individual method or together with other analysis methods for detecting defected wheels.

The second and third values may also be either absolute or relative values based on the reference force of the normal part of the wheel, for example. For each threshold there may be more than one threshold in order to illustrate different levels of defects and their harmfulness. For example, a low threshold value may be used for providing a notification, a middle threshold value may be used for providing an alert, and a high threshold value may be used for providing an alarm, upon exceeding the value.

It is preferable to use high sampling rate in order to achieve accurate derivative and integral values. This way it is possible to provide accurate calculations in order to determine the harmfulness f the defect and the length of the wheel flat.

Moreover, according to an advantageous embodiment of the invention the data processing unit 116 may further comprise at least one of the following means, such as a communicating means 116d adapted to transmit/receive information from/to the sensors 110 and/or data collector 114. Further the communicating means 116d is preferably adapted to inform a user, such as an administrator, driver or other party of the results composed by the means 116c.

In addition according to an embodiment of the invention the data processing unit 116 comprises a computer program product 116e for measuring characteristics of an object travelling on a rail, where the computer program product, when run on a computer, is adapted to read data from the sensors, to determine a reference weight force value of a normal part of a wheel, to compare the collected data relating to the wheel under measurement with the normal value and to report a wheel defect if the deviation exceeds a predetermined value. As described, the reference weight force value of the normal part of the wheel is determined by selecting a data sample, preferably a median sample, and using its value as the reference.

In one embodiment of the invention the data processing unit is arranged to construct at least two virtual measurement sub-ranges in such a way that the first virtual measurement sub-range corresponds a first part of the measurement zone and the second measurement sub-range corresponds a second part of the measurement zone next the first one, and further adapted to construct the first virtual measurement sub-range from data of sensors forming the first part of the measurement zone, where data is read when the object travels along the rail in the first part of the measurement zone and to construct the second virtual measurement sub-range from data of sensors forming the second part of the measurement zone, where data is read when the object travels along the rail in the second part of the measurement zone, and furthermore adapted to construct a virtual measurement range to illustrate force effects of the object travelling on the rail at least in the part of the measurement zone by combining at least the first and second virtual measurement sub-ranges.

According to a further embodiment of the invention the data processing unit 116 is also adapted to construct a display of a user interface means and updating it and also alert when detecting a broken wheel or other anomalous. Moreover the data processing unit can be adapted to visually illustrate measuring results, such as the type and number of wagons, and bogies and/or wheels with defects, as well as also to construct and display a processed curve of forces induced by a single wheel in a measurement zone with desired length. These are, however, optional features of the data processing unit, and can be implemented also by other means.

Figure 2 illustrates typical wheel load distribution in a rail 106 and sleepers 108, where it can be clearly seen that force effects of the wheel 104 distribute very far in the rail. Thus it is also desirable that forces distributing along the rail 106 can be measured in order to achieve reliable measuring results and interference of the adjacent wheel can be either defeated or determined.

Wheel load distributes along the rail 106 in horizontal direction and over neighbouring sleepers 108. For example, approximately 50% of the wheel load of the first wheel 104a is directed to the sleeper 108Aa locating just below the wheel 104a, but approximately other 50% of the wheel load of the first wheel 104a is distributed along the rail 106 in horizontal direction (left and right) and further to the adjacent sleepers 108Ab and 108Ac. In similar way the wheel load of the second wheel 104b is directed to the sleeper 108Ba locating just below the wheel 104b, and other 50% of the wheel load of the second wheel 104b is distributed along the rail 106 and further to the adjacent sleepers 108Bb and 108Bc, where the adjacent sleepers 108Bb and 108Bc are same as sleepers 108Ac and 108Ab.

Now, when monitoring for example characters of the wheel 104a, three sleeper sensors 110b are typically chosen to be used, one just below the wheel 104a and two sleeper sensors in the adjacent sleepers, and further two rail sensors 110c, one of which advantageously locates between the sleepers 108AB, whereupon residual forces distributing along the rail in horizontal directions can be defeated or determined.

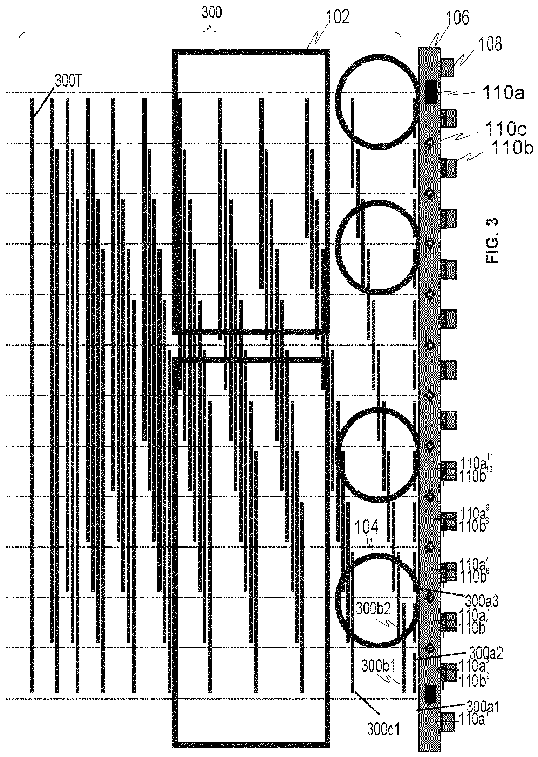

Figure 3 illustrates an idea of continuous rail-wheel-contact-force analysis and also idea of constructing measurement ranges 300 with different length from measurement sub-ranges. a virtual measurement sub-range 300a1 is constructed from data measured by sleeper sensor 110b², and adjacent rail sensors 110a¹, and 110a³, and an adjacent measurement sub-range 300a2 is constructed from data measured by sleeper sensor 110b⁴, and adjacent rail sensors 110a³, and 110a⁵. Now the longer measurement range 300b1 can be achieved either by combining two measurement sub-ranges 300a1 and 300a2 or by constructing from data measured by sleeper sensors 110b² and 110b⁴, and rail sensors 110a¹, and 110a⁵. With the same inventive analogue measurement range 300c1 is either combined from measurement sub-ranges 300a1, 300a2 and 300a3, or constructed from data measured by sleeper sensors 110b², 110b⁴, and 110b⁶, and rail sensors 110a¹, and 110a⁷.

Now, if a wheel 104, for example, is monitored, when a wagon 102 travels along the rail 106, the measurement sub-range 300c1 is also "shifted" along the travelling wagon 102 or wheel 104 so, that next measurement sub-range 300c2 covers a measuring sub-zone of next three sleepers, and etc. The change of the measurement sub-range is advantageously done, when the wheel 104 has travelled a distance of one sleeper (approximately 60 cm). By changing again to the next measurement sub-range and repeating this through all sensors and the measurement field, when the wheel travels, a reliable measurement for said wheel can be achieved. The same can be done also for a bogie, but now the measurement sub-range and also sub-zone is typically clearly longer than for a wheel. If the wheel or bogie is followed with the virtual scale or measurement sub-ranges through the whole measurement field, a longest possible measurement range 300T can be composed from sub-ranges, such as 300a1, 300a2, 300a3, or 300b1, 300b2, or 300c1, 300c2, 300c3, whereupon statistical reliability is very high. The measurement ranges 300 are advantageously constructed programmatically, such as by combining shearing stresses measured by appropriate sensors. Thus the present invention enables to monitor a single wheel, axle, bogie or even a whole wagon. Moreover, because a measurement sub-range constructed for a wheel, for example, is shifted along the moving wheel at the same speed, a long measurement range can be achieved.

The measurement range and sub-range 300, 300a, 300b, 300c, 300T of various length can be constructed programmatically for example in real time when the wheel 104 travels on the measurement zone. Alternatively the measurement range and sub-range of desired length can also be constructed later when data has already been stored in the memory means 116a of the data processing unit 116.

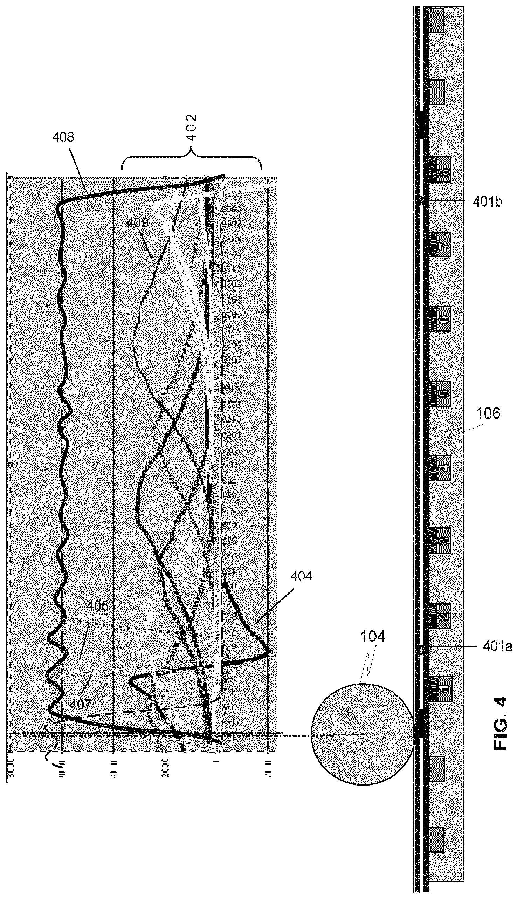

Figure 4 illustrates an exemplary graph 400 of a measurement of an exemplary wheel according to an embodiment of the present invention, where curves 402 illustrate forces measured with different sensors in function of distance of a moving wheel.

The curve 408 illustrates force effects of a single wheel at the length of the measurement zone of sleepers 1-8, where the curve 408 can be achieved with measurement sub-ranges shifted along the moving wheel, for example. The curve 407 illustrates detected forces in a measurement sub-range of one sleeper (approximately 40 cm), and the curve 406 illustrates forces in a measurement range between the rail sensor 401a and 401b. The curves 409 illustrate forces measured by different sleeper sensors and the curve 404 illustrates forces induced by the wheel 104 and measured by the rail sensor 401a, when the wheel 104 travels along the rail 106 and bypasses the rail sensor 401a. It should be noticed that when the wheel 104 approaches the rail sensor 401a, the rail sensor 401a detects horizontal force, which sign is positive, and when the wheel 104 draws away from the rail sensor 401a, the rail sensor 401a detects horizontal force, which sign is negative. In this way by using the rail sensors horizontal forces caused by the wheel can be monitored and also the adjacent wheels, which interfere the measuring process of the wheel.

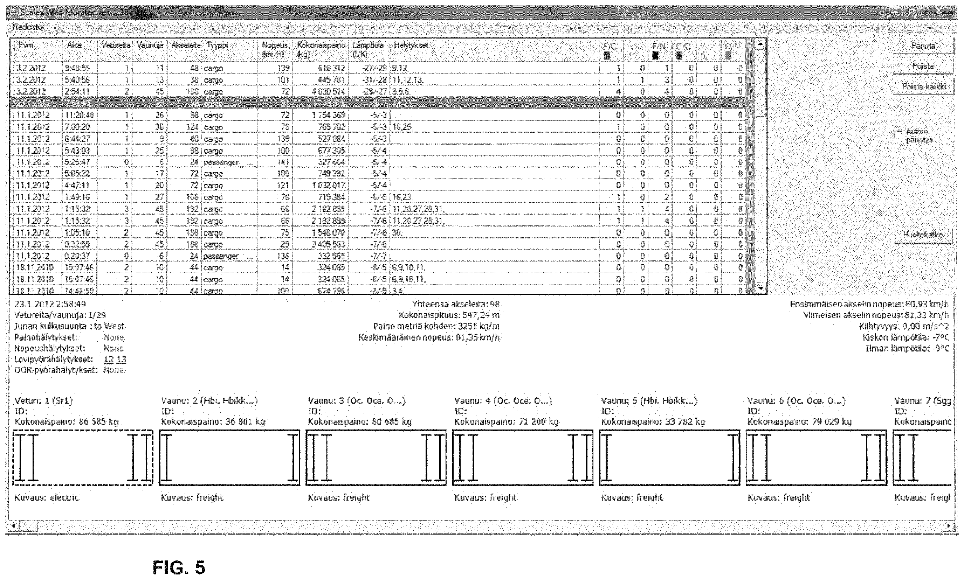

Figure 5 illustrates an exemplary user interface according to an advantageous embodiment of the present invention, where the data processing unit is adapted to analyse data collected from sensors in such a way, that a type of a vehicle and/or wagon, numbers of wagons, bogies and wheels, as well as total weight of the whole vehicle, weight of a wagon, bogie and/or wheel, as well as lateral forces, can be displayed to a user, such as an administrator, driver or other party. Moreover, possible broken wheels, such as flat wheel as well as other defects in a structure of the wheel, springing or wagon are advantageously displayed to the user visually, like colouring an appropriate position of defects, such as broken wheel. Alerts can be communicated to the user also using other means, such as command line or sound signal.

The data processing unit is also advantageously adapted to compare data collected from sensors to reference data of a normal, unbroken part of the wheel, and to assessing whether a deviation goes beyond the accepted limits in order to detect anomalous in collected data and to alert. A median value is preferably used as the reference weight force value of the normal part of the wheel.

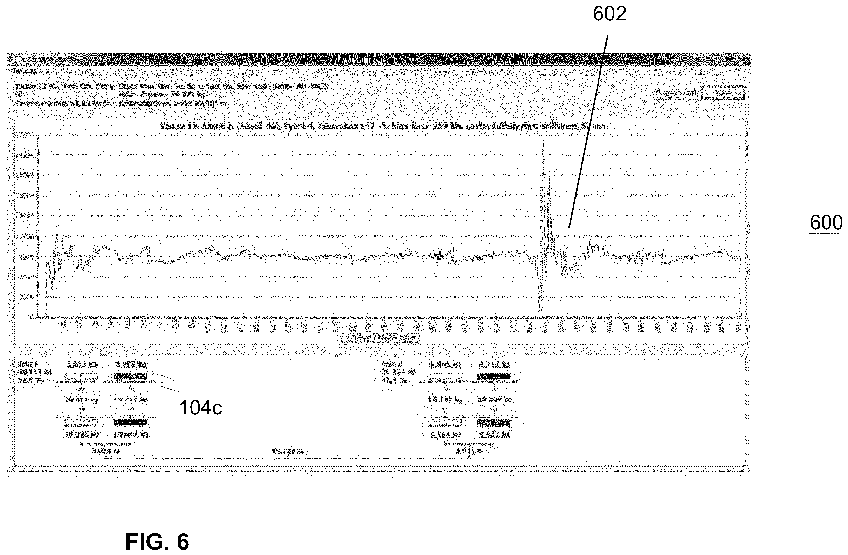

Figure 6 illustrates an exemplary user interface 600 and an exemplary graph 602 of continuous force effects of a wheel travelling on a rail in a measurement zone. According to an embodiment of the invention a user can select a desired wagon, such as a wagon with anomalous feature in figure 5, whereupon the user interface 600 can be displayed illustrating wheels and bogies 1 and 2 of the desired wagon, for example. Next the user can select a wheel 104c of the bogie in order to being displayed a processed continuous force effect curve 602 of the selected wheel. The display may also show a reference value as a straight line. A median value according to the invention can be used as the reference line. The anomalous feature caused by the defected wheel can be clearly seen from the curve 602. Alternatively the wagon and defected wheel of the wagon can be selected automatically, as well as the curve illustrating force effects of the defected wheel can be displayed automatically without any action of the user.

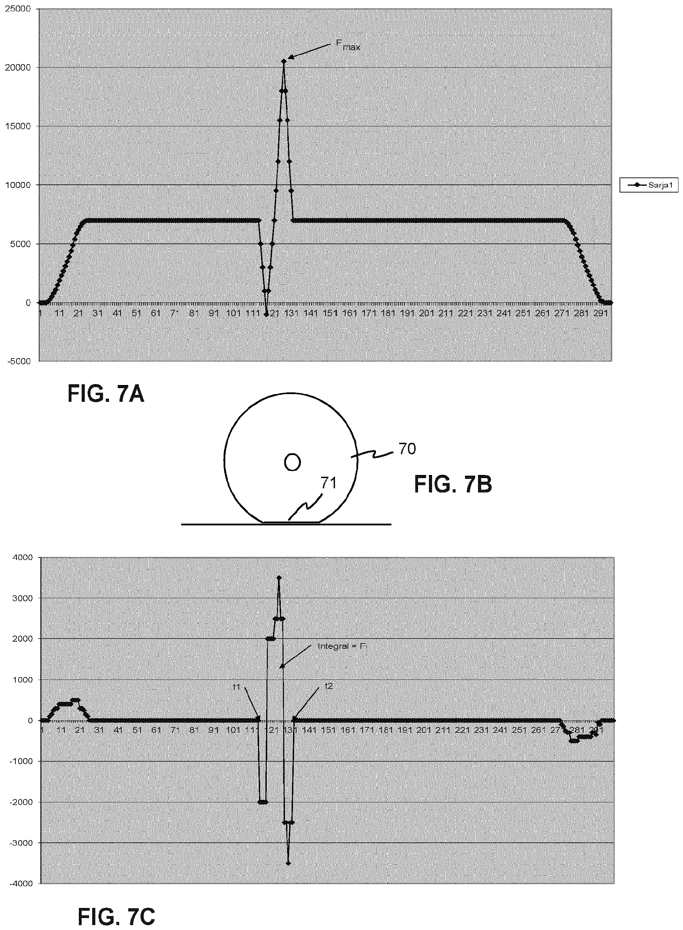

Figure 7A illustrates a signal of a measurement zone when a wheel 70 with a large wheel flat defect 71 according to Figure 7B travels through the measurement field. Fₘₐₓ denotes the maximum force measured at the rail. Figure 7C illustrates a derivative of the signal of Figure 7A. It shows that a high peak is present due to the fast rate of change in the original signal. It is now possible to compare the (absolute) derivative signal with a second derivative threshold value. If the threshold value is exceeded, this means that the wheel has a defect which causes a strong and fast changing force to the rail.

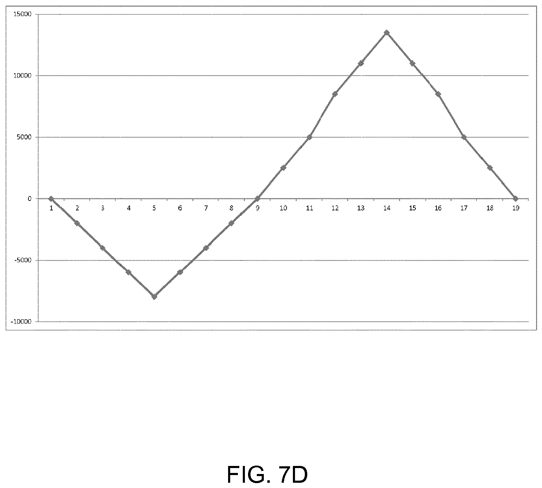

It is also possible to provide an integral value Fᵢ of the spike, by integrating the derivative signal from t₁ to t₂, wherein the points t₁ and t₂ are the start and end points of the flat wheel effect, respectively. The start and end points may be determined based on the derivative values, for example. Figure 7D illustrates the integral value at points t₁, t₁+1, t₁+2, ... , t₂. The peak of this integral value corresponds to the peak value of the force caused by the wheel flat defect to the rail. It is further possible to determine a third threshold force value, whereby the integral value of the spike is compared to the third threshold value. If the (absolute) value of the spike exceeds the third threshold value the user may be informed of an excess value of the measured force.

It is also possible to provide an integral of the sensor signal without derivation. In this case it is preferable first to provide an absolute value of the signal and to cut out samples which have a value below a predetermined threshold. After this, the remaining signal can be compared to a further force threshold value, whereby a user is informed if the threshold value is exceeded.

The invention has been explained above with reference to the aforementioned embodiments, and several advantages of the invention have been demonstrated. It is clear that the invention is not only restricted to these embodiments, but comprises all possible embodiments within the scope of the inventive thought and the following patent claims.

For example, it should be noted that the use of virtual measurement zones is described as an exemplary implementation, but also other ways of handling the data can be used for monitoring the objects moving on the rails. Some data handling procedures are described in documents that are mentioned in the prior art section of this disclosure. After providing the sensor data, the present invention can be used for detecting faults in the objects such as wheels.

It should also be noted that the methods of providing derivatives and/or integrals of the sample signal data can be used also independently of the reference sample selection of the present invention, provided the fall under the scope of the appended claims.

## Claims

1. An arrangement (100) for measuring characteristics of a wheel (102, 104) travelling on a rail (106) lying on sleepers (108), wherein the wheel has a normal part and may have a defected part, and wherein the arrangement comprises sensors (110) adapted to measure force effects induced by the wheel to the rail, the sensors forming a measurement zone and being coupled with data processing means (116), wherein the data processing means (116) Is adapted to read data from the sensors, **characterized in that**
- the processing means are adapted to select a median data sample from sensor data related to a wheel and to determine a reference force value of the normal part of the wheel on the basis of the value of the selected median sample data,
- the processing means are adapted to compare data relating to said wheel with the reference value, and
- the processing means are adapted to Inform a user when the deviation in said comparison exceeds a predetermined first threshold value.

2. An arrangement according to claim 1, **characterized in that** the processing means is adapted to provide a derivative or high pass filtering for the sample data relating to said wheel.

3. An arrangement according to claim 2, **characterized in that** the processing means is adapted to compare the derivative data or high pass filtered data with a second threshold value, and to inform a user when the deviation in said comparison exceeds a predetermined threshold value.

4. An arrangement according to any of the previous claims, **characterized in that** the processing means is adapted to provide an integral of the sample data or its derivative or high pass filtered form, and the processing means is further adapted to compare the integral data with a third threshold value, and to inform a user when the deviation in said comparison exceeds a predetermined threshold value.

5. An arrangement according to any of the previous claims, **characterized in that** the measurement zone of the arrangement comprises sleeper sensors between sleepers and rail, and rail sensors in the rail between sleepers.

6. An arrangement according to any of the previous claims, **characterized in that** the arrangement comprises sensors at the ends of the measurement zones for detecting a wheel and activating the measurement, wherein the sensors at the ends of the measurement zone are inductive rail contactors, sleeper sensors or rail sensors.

7. A method (100) for measuring characteristics of an wheel (102, 104) travelling on a rail (106) lying on sleepers (108), wherein the wheel has a normal part and may have a defected part, and wherein force effects induced by the object to the rail are detected by a plurality of sensors (110) forming a measurement field, **characterized in that**
- a median data sample is selected from sensor data related to a wheel and a reference force value of the normal part of the wheel is determined on the basis of the value of the selected median sample data,
- data relating to said wheel is compared with the reference value, and
- the processing means are adapted to inform a user when the deviation in said comparison exceeds a predetermined threshold value.

8. The method according to claim 7, **characterized in that** the processing means is adapted to provide a derivative or high pass filtering for the sample data relating to the wheel.

9. The method according to claim 8, **characterized in that** the processing means is adapted to compare the derivative data or high pass filtered data with a second threshold value, and to inform a user when the deviation in said comparison exceeds a predetermined threshold value.

10. The method according to any of claims 7-9, **characterized in that** the processing means is adapted to provide an integral of the sample data or its derivative or high pass filtered form, and the processing means is further adapted to compare the integral data with a third threshold value, and to inform a user when the deviation in said comparison exceeds a predetermined threshold value.

11. A computer program product (116e), **characterized in that** it is adapted, when run on a computer, to perform the method according to claim 7.

12. A data processing unit (116), **characterized in that** it comprises the computer program product according to claim 11.

## Patentansprüche

1. Anordnung (100) zur Messung der Eigenschaften eines Rads (102, 104), das auf einer Schiene (106) läuft, welche auf Schwellen (108) liegt, wobei das Rad ein normales Teil aufweist und ein defektes Teil aufweisen kann, und wobei die Anordnung Sensoren (110) umfasst, die zum Messen von Krafteinwirkungen geeignet sind, welche durch das Rad auf die Schiene induziert werden, wobei die Sensoren einen Messbereich ausbilden und mit Datenverarbeitungsmitteln (116) verkoppelt sind, wobei das Datenverarbeitungsmittel (116) zum Lesen von Daten aus den Sensoren geeignet ist, **dadurch gekennzeichnet, dass**
- die Verarbeitungsmittel zum Auswählen einer Mediandatenprobe aus Sensordaten, die sich auf ein Rad beziehen, und zum Bestimmen eines Referenzkraftwerts des normalen Teils des Rads auf der Grundlage des Werts der ausgewählten Medianprobendaten geeignet sind,
- die Verarbeitungsmittel zum Vergleichen von Daten, die sich auf das Rad beziehen, mit dem Referenzwert geeignet sind, und
- die Verarbeitungsmittel zum Informieren eines Benutzers geeignet sind, wenn die Abweichung des Vergleichs einen vorgegebenen ersten Schwellenwert übersteigt.

2. Anordnung nach Anspruch 1, **dadurch gekennzeichnet, dass** das Verarbeitungsmittel zum Vorsehen einer Ableitung oder von Hochpassfiltern für die Probendaten, welche sich auf das Rad beziehen, geeignet ist.

3. Anordnung nach Anspruch 2, **dadurch gekennzeichnet, dass** das Verarbeitungsmittel zum Vergleichen der abgeleiteten Daten oder hochpassgefilterten Daten mit einem zweiten Schwellenwert und zum Informieren eines Benutzers, wenn die Abweichung des Vergleichs einen vorgegebenen Schwellenwert übersteigt, geeignet ist.

4. Anordnung nach einem der vorhergehenden Ansprüche, **dadurch gekennzeichnet, dass** das Verarbeitungsmittel zum Vorsehen eines Integrals der Probendaten oder ihrer abgeleiteten oder hochpassgefilterten Form geeignet ist, und dass das Verarbeitungsmittel ferner zum Vergleichen der Integraldaten mit einem dritten Schwellenwert und zum Informieren eines Benutzers, wenn die Abweichung des Vergleichs einen vorgegebenen Schwellenwert übersteigt, geeignet ist.

5. Anordnung nach einem der vorhergehenden Ansprüche, **dadurch gekennzeichnet, dass** der Messbereich der Anordnung Schwellensensoren zwischen Schwellen und Schiene und Schienensensoren in der Schiene zwischen Schwellen umfasst.

6. Anordnung nach einem der vorhergehenden Ansprüche, **dadurch gekennzeichnet, dass** die Anordnung Sensoren an den Enden der Messbereiche zum Erkennen eines Rads und Aktivieren der Messung umfasst, wobei die Sensoren an den Enden des Messbereichs induktive Schienenkontaktoren, Schwellensensoren oder Schienensensoren sind.

7. Verfahren (100) zur Messung der Eigenschaften eines Rads (102, 104), das auf einer Schiene (106) läuft, welche auf Schwellen (108) liegt, wobei das Rad ein normales Teil aufweist und ein defektes Teil aufweisen kann, und wobei Krafteinwirkungen, welche durch das Objekt auf die Schiene induziert werden, durch mehrere Sensoren (110) erkannt werden, die ein Messfeld ausbilden, **dadurch gekennzeichnet, dass**
- eine Mediandatenprobe aus Sensordaten, die sich auf ein Rad beziehen, ausgewählt wird und ein Referenzkraftwert des normalen Teils des Rads auf der Grundlage des Werts der ausgewählten Medianprobendaten bestimmt wird,
- Daten, die sich auf das Rad beziehen, mit dem Referenzwert verglichen werden, und
- die Verarbeitungsmittel zum Informieren eines Benutzers geeignet sind, wenn die Abweichung des Vergleichs einen vorgegebenen Schwellenwert übersteigt.

8. Verfahren nach Anspruch 7, **dadurch gekennzeichnet, dass** das Verarbeitungsmittel zum Vorsehen einer Ableitung oder von Hochpassfiltern für die Probendaten, welche sich auf das Rad beziehen, geeignet ist.

9. Verfahren nach Anspruch 8, **dadurch gekennzeichnet, dass** das Verarbeitungsmittel zum Vergleichen der abgeleiteten Daten oder hochpassgefilterten Daten mit einem zweiten Schwellenwert und zum Informieren eines Benutzers, wenn die Abweichung des Vergleichs einen vorgegebenen Schwellenwert übersteigt, geeignet ist.

10. Verfahren nach einem der Ansprüche 7 bis 9, **dadurch gekennzeichnet, dass** das Verarbeitungsmittel zum Vorsehen eines Integrals der Probendaten oder ihrer abgeleiteten oder hochpassgefilterten Form geeignet ist, und dass das Verarbeitungsmittel ferner zum Vergleichen der Integraldaten mit einem dritten Schwellenwert und zum Informieren eines Benutzers, wenn die Abweichung des Vergleichs einen vorgegebenen Schwellenwert übersteigt, geeignet ist.

11. Computerprogrammprodukt (116e), **dadurch gekennzeichnet, dass** es, wenn es auf einem Computer ausgeführt wird, zum Ausführen des Verfahrens nach Anspruch 7 geeignet ist.

12. Datenverarbeitungseinheit (116), **dadurch gekennzeichnet, dass** sie das Computerprogrammprodukt nach Anspruch 11 umfasst.

## Revendications

1. Dispositif (100) destiné à mesurer des caractéristiques d'une roue (102, 104) circulant sur un rail (106) reposant sur des traverses (108), dans lequel la roue présente une partie normale et peut présenter une partie défectueuse, et dans lequel le dispositif comprend des capteurs (110) adaptés pour mesurer des effets de force induits par la roue sur le rail, les capteurs formant une zone de mesure et étant couplés à un moyen de traitement de données (116), dans lequel le moyen de traitement de données (116) est adapté pour lire des données des capteurs, **caractérisé en ce que**
- les moyens de traitement sont adaptés pour sélectionner un échantillon de données médian parmi des données de capteur relatives à une roue et pour déterminer une valeur de force de référence de la partie normale de la roue sur la base de la valeur des données d'échantillon médian sélectionnées,
- les moyens de traitement sont adaptés pour comparer des données relatives à ladite roue avec la valeur de référence, et
- les moyens de traitement sont adaptés pour informer un utilisateur lorsque l'écart dans ladite comparaison dépasse une première valeur seuil prédéterminée.

2. Dispositif selon la revendication 1, **caractérisé en ce que** le moyen de traitement est adapté pour fournir un dérivé ou un filtrage passe-haut pour les données d'échantillon relatives à ladite roue.

3. Dispositif selon la revendication 2, **caractérisé en ce que** le moyen de traitement est adapté pour comparer les données dérivées ou les données filtrées par filtrage passe-haut avec une deuxième valeur seuil, et pour informer un utilisateur lorsque l'écart dans ladite comparaison dépasse une valeur seuil prédéterminée.

4. Dispositif selon l'une quelconque des revendications précédentes, **caractérisé en ce que** le moyen de traitement est adapté pour fournir une intégrale des données d'échantillon ou de leur forme dérivée ou filtrée par filtrage passe-haut, et le moyen de traitement est en outre adapté pour comparer les données intégrales avec une troisième valeur seuil, et pour informer un utilisateur lorsque l'écart dans ladite comparaison dépasse une valeur seuil prédéterminée.

5. Dispositif selon l'une quelconque des revendications précédentes, **caractérisé en ce que** la zone de mesure du dispositif comprend des capteurs de traverse entre des travers et le rail, et des capteurs de rail dans le rail entre des traverses.

6. Dispositif selon l'une quelconque des revendications précédentes, **caractérisé en ce que** le dispositif comprend des capteurs aux extrémités des zones de mesure, pour la détection d'une roue et l'activation de la mesure, dans lequel les capteurs aux extrémités de la zone de mesure sont des contacteurs de rail inductifs, des capteurs de traverse ou des capteurs de rail.

7. Procédé (100) destiné à mesurer des caractéristiques d'une roue (102, 104) circulant sur un rail (106) reposant sur des traverses (108), dans lequel la roue présente une partie normale et peut présenter une partie défectueuse, et dans lequel des effets de force induits par l'objet sur le rail sont détectés par une pluralité de capteurs (110) formant un champ de mesure, **caractérisé en ce que**
- un échantillon de données médian est sélectionné parmi des données de capteur relatives à une roue et une valeur de force de référence de la partie normale de la roue est déterminée sur la base de la valeur des données d'échantillon médian sélectionnées,
- des données relatives à ladite roue sont comparées avec la valeur de référence, et
- les moyens de traitement sont adaptés pour informer un utilisateur lorsque l'écart dans ladite comparaison dépasse une valeur seuil prédéterminée.

8. Procédé selon la revendication 7, **caractérisé en ce que** le moyen de traitement est adapté pour fournir un dérivé ou un filtrage passe-haut pour les données d'échantillon relatives à la roue.

9. Procédé selon la revendication 8, **caractérisé en ce que** le moyen de traitement est adapté pour comparer les données dérivées ou les données filtrées par filtrage passe-haut avec une deuxième valeur seuil, et pour informer un utilisateur lorsque l'écart dans ladite comparaison dépasse une valeur seuil prédéterminée.

10. Procédé selon l'une quelconque des revendications 7 à 9, **caractérisé en ce que** le moyen de traitement est adapté pour fournir une intégrale des données d'échantillon ou de leur forme dérivée ou filtrée par filtrage passe-haut, et le moyen de traitement est en outre adapté pour comparer les données intégrales avec une troisième valeur seuil, et pour informer un utilisateur lorsque l'écart dans ladite comparaison dépasse une valeur seuil prédéterminée.

11. Produit de programme informatique (116e), **caractérisé en ce que** celui-ci est adapté pour mettre en œuvre le procédé selon la revendication 7 lorsqu'il est exécuté sur un ordinateur.

12. Unité de traitement de données (116), **caractérisée en ce que** celle-ci comprend le produit de programme informatique selon la revendication 11.
